# FASCICULE DE BREVET EUROPEEN

(11) **EP 3 265 642 B1**
(45) Date de publication et mention de la délivrance du brevet: **30.01.2019**
(21) Numéro de dépôt: 16710267.2
(22) Date de dépôt: 03.03.2016
(51) Int. Cl.: E21B 43/01, F16L 1/15, F16L 1/24, F16L 1/26, E02B 17/00, E21B 17/01, E21B 19/00

(54) **INSTALLATION COMPRENANT AU MOINS DEUX LIAISONS FOND-SURFACE COMPRENANT DES RISERS VERTICAUX RELIES PAR DES BARRES**
ANLAGE MIT MINDESTENS ZWEI UNTERFLÄCHIGEN VERBINDUNGEN MIT DURCH BALKEN VERBUNDENEN VERTIKALEN STEIGROHREN
FACILITY COMPRISING AT LEAST TWO BOTTOM-SURFACE LINKS COMPRISING VERTICAL RISERS CONNECTED BY BARS

(30) Priorité: 06.03.2015 FR 1551898
(43) Date de publication de la demande: 10.01.2018
(73) Titulaire: SAIPEM S.A., 78180 Montigny Le Bretonneux (FR)
(72) Inventeur: FATICA, Giulio, 20152 Milano (IT); ROTA, Gianmarco, 24030 Mozzo (Bergamo) (IT); PALLADINI, Roberto, 20134 Milano (IT)
(74) Mandataire: Domange, Maxime
(86) Numéro de dépôt international: PCT/FR2016/050492
(87) Numéro de publication internationale: WO 2016/142607

(56) Documents cités:
- WO-A1-02/103153
- WO-A1-2008/152505
- WO-A1-2011/050064

## Description

La présente invention a pour objet une installation de liaisons fond-surface multiples d'au moins deux conduites sous-marines reposant au fond de la mer, notamment installées à grande profondeur comprenant au moins une tour-hybride.

Le secteur technique de l'invention est plus particulièrement le domaine de la fabrication et de l'installation de colonnes montantes (« riser ») de production pour l'extraction sous-marine de pétrole, de gaz ou autre matériau soluble ou fusible ou d'une suspension de matière minérale à partir de tête de puits immergé jusqu'à un support flottant, pour le développement de champs de production installés en pleine mer au large des côtes. L'application principale et immédiate de l'invention étant dans le domaine de la production pétrolière.

Le support flottant comporte en général des moyens d'ancrage pour rester en position malgré les effets des courants, des vents et de la houle. Il comporte aussi en général des moyens de stockage et de traitement du pétrole ainsi que des moyens de déchargement vers des pétroliers enleveurs, ces derniers se présentant à intervalle régulier pour effectuer l'enlèvement de la production. L'appellation courante de ces supports flottants est le terme anglo-saxon "Floating Production Storage Offloading" (signifiant "moyen flottant de stockage, de production et de déchargement") dont on utilise le terme abrégé "FPSO" dans l'ensemble de la description suivante.

On connaît des liaisons fond-surface d'une conduite sous-marine reposant au fond de la mer, liaison du type appelé tour-hybride comprenant :
- un riser vertical dont l'extrémité inférieure est ancrée au fond de la mer et relié à une dite conduite reposant au fond de la mer, et l'extrémité supérieure est tendue par un flotteur immergé en subsurface auquel elle est reliée, et
- une conduite de liaison, en général une conduite de liaison flexible, entre l'extrémité supérieure dudit riser et un support flottant en surface, ladite conduite de liaison flexible prenant, le cas échéant, de par son propre poids la forme d'une courbe en chaînette plongeante, c'est-à-dire descendant largement en dessous du flotteur pour remonter ensuite jusqu'audit support flottant.

On connaît également des liaisons fond-surface réalisées en remontant de manière continue jusqu'en subsurface des conduites résistantes et rigides constituées d'éléments tubulaires en acier de forte épaisseur soudés ou vissés entre eux, en configuration de chaînette avec une courbure continûment variable dans toute leur longueur en suspension, communément appelés « Steel Catenary Riser » (SCRs) signifiant « riser en acier en forme de chaînette » et aussi communément appelés « conduite rigide du type caténaire » ou « riser du type SCR ».Une telle conduite caténaire peut remonter jusqu'au support flottant en surface ou seulement jusqu'à un flotteur en subsurface qui tensionne son extrémité supérieure, laquelle extrémité supérieure est alors reliée à un support flottant par une conduite de liaison flexible plongeante.

On cherche à mettre en oeuvre un maximum de liaisons fond-surface à partir d'un même support flottant pour optimiser l'exploitation des champs pétroliers. C'est pourquoi on a proposé différents systèmes pouvant associer plusieurs risers verticaux ensemble afin de réduire l'encombrement du champ d'exploitation et pouvoir mettre en oeuvre un plus grand nombre de liaisons fond-surface reliés à un même support flottant. Typiquement il est nécessaire de pouvoir installer jusqu'à 30, voire 40 liaisons fond-surface à partir d'un même support flottant.

Dans WO 00/49267, on a décrit une tour hybride multiple comportant un système d'ancrage avec un tendon vertical constitué soit d'un câble, soit d'une barre métallique, soit encore d'une conduite tendue à son extrémité supérieure par un flotteur. L'extrémité inférieure du tendon est fixée à une embase reposant au fond. Ledit tendon comporte des moyens de guidage répartis sur toute sa longueur à travers lesquels passent une pluralité de dits risers verticaux. Ladite embase peut être posée simplement sur le fond de la mer et rester en place par son propre poids, ou rester ancrée au moyen de piles ou tout autre dispositif propre à la maintenir en place. Dans WO 00/49267, l'extrémité inférieure du riser vertical est apte à être connectée à l'extrémité d'une manchette coudée, mobile, entre une position haute et une position basse, par rapport à ladite embase, à laquelle cette manchette est suspendue et associée à un moyen de rappel la ramenant en position haute en l'absence du riser. Cette mobilité de la manchette coudée permet d'absorber les variations de longueur du riser sous les effets de la température et de la pression. En tête du riser vertical, un dispositif de butée, solidaire de celui-ci, vient s'appuyer sur le guide support installé en tête du flotteur et maintient ainsi la totalité du riser en suspension.

Ce mode de réalisation comprenant une multiplicité de risers verticaux maintenus par une structure centrale comportant des moyens de guidage est relativement coûteux et complexe à installer. D'autre part, l'installation doit être préfabriquée à terre avant d'être remorquée en mer, puis une fois sur site, cabanée en vue d'être mise en place. En outre, sa maintenance requiert également des coûts d'exploitation relativement élevés.

Dans WO02/066786 et WO02/103153 au nom de la demanderesse, on a décrit des tours-hybrides à risers multiples avec des systèmes d'ancrage de risers verticaux aptes à recevoir 2 risers côte à côte à partir d'une même embase d'ancrage, et dont les flotteurs en tête desdits risers sont solidaires et fixés l'un à l'autre au moyen d'une structure articulée en forme de parallélogramme. Les 2 risers sont par ailleurs reliés à l'aide de colliers tubulaires fixés sur l'un des risers et relié par des bagues coulissant librement autour du deuxième riser, de sorte que les 2 risers peuvent suivre sensiblement les mêmes mouvements latéraux tout en étant relativement plus indépendants dans leurs mouvements verticaux.

En effet, lorsque l'on souhaite associer une pluralité de risers verticaux à un même support flottant, se pose le problème de l'interférence des mouvements desdits risers qui sont soumis au même mouvement que leur flotteur de tensionnement en tête sous l'effet des déplacements du support flottant en surface soumis à la houle, au vent et aux courants.

Les réalisations décrites ci-dessus sont relativement performantes, mais encore relativement trop compliquées en ce qui concerne leur procédé de pose et les contraintes de maintenance lors de leur mise en oeuvre, notamment au niveau du système d'ancrage mais également s'agissant de l'association des risers entre eux. En outre et surtout ce type de tour hybride à risers multiples doit être préfabriqué à terre avant d'être installé en mer.

Lorsque l'on met en oeuvre une multiplicité de liaisons fond-surface de type tour-hybride comprenant chacune un riser vertical, il est nécessaire en pratique d'espacer davantage que pour les risers caténaires de type SCRs les différentes conduites les unes par rapport aux autres car les flotteurs au sommet des risers sont soumis à des déplacements dans un cône dont le sommet est situé au niveau du système d'ancrage, et dont l'angle nécessite de prévoir une distance suffisante entre les différents flotteurs en tête des risers verticaux pour éviter que ceux-ci ne viennent se heurter les uns contre les autres.

Ces contraintes impliquent un étalement de la zone d'exploitation et donc une limitation du nombre de liaisons fond-surface pouvant être reliées sur un même support flottant, au niveau des bordés pour éviter les interférences entre les différentes liaisons.

De plus, le pétrole brut cheminant sur de très grandes distances, plusieurs kilomètres, on doit leur fournir un niveau d'isolation extrême coûteux pour, d'une part minimiser l'augmentation de viscosité qui conduirait à une réduction de la production horaire des puits, et d'autre part d'éviter le blocage du flux par dépôt de paraffine, ou formation d'hydrates dès lors que la température descend aux alentours de 30-40°C. Ces derniers phénomènes sont d'autant plus critiques, particulièrement en Afrique de l'Ouest, que la température du fond de la mer est de l'ordre de 4°C et que les pétroles bruts sont de type paraffiniques. Il est donc souhaitable que les liaisons fond-surface soient de longueurs réduites et donc que l'encombrement des différentes liaisons reliées à un même support flottant soient limités.

C'est pourquoi on cherche à fournir une installation apte à exploiter depuis un même support flottant une pluralité de liaisons fond-surface de type tour-hybride avec risers verticaux d'encombrement et mouvement réduits et qui soit aussi plus simple à poser et pouvant être fabriquée en mer depuis un navire de pose de conduite, ceci afin d'éviter une préfabrication à terre suivie d'un remorquage sur site et d'un cabanage pour la mise en place finale de l'installation.

Dans la publication de la demande US 2004/0129425 on a proposé de mettre en oeuvre un unique et même flotteur auquel est reliée une pluralité de risers verticaux ancrés au fond de la mer. Mais le système proposé dans ce brevet présente plusieurs inconvénients :
- tout d'abord, le flotteur pour des raisons de mise en place de l'installation, doit présenter des caractéristiques de flottabilité variables de manière à pouvoir augmenter la flottabilité au fur et à mesure de l'accrochage séquentiel des différentes conduites du type riser SCR plus conduite flexible, et
- en second lieu, l'accrochage du sommet d'un deuxième riser vertical et/ou d'une conduite SCR sur le flotteur au sommet d'un premier riser vertical pose des problèmes d'ordre pratique qui ne sont pas résolus et même pas évoqués dans cette publication de demande de brevet américain.

De plus, les dilatations différentielles entre deux dits risers, l'un froid et l'autre chaud, pouvant atteindre plusieurs mètres pour des profondeurs d'eau de 1500m, rendent quasiment impossible la mise en parallèle de deux dits risers en l'absence de dispositions particulières soit au niveau supérieur, soit au niveau inférieur desdits risers.

Enfin, un autre inconvénient du système proposé dans cette demande de brevet US 2004/0129425 est que le flotteur doit être pré dimensionné en fonction d'une flottabilité maximum déterminée, apte à tensionner un nombre prédéterminé de conduites. Or, en pratique, il est souhaitable de pouvoir mettre en place les différentes liaisons fond-surface de manière étalée dans le temps sans pouvoir préjuger, lors de l'installation du système initial, de leur nombre final qui n'est en général pas connu au départ de manière certaine et précise.

Dans WO2007/023233, on décrit une installation de liaisons fond-surface d'au moins deux conduites sous-marines reposant au fond de la mer, notamment à grande profondeur, comprenant :
1) une première tour hybride comprenant :
   a) une conduite rigide consistant en un riser vertical dont l'extrémité inférieure est fixée à une première embase ancrée au fond de la mer et reliée à une première dite conduite sous-marine reposant au fond de la mer et dont l'extrémité supérieure est tensionnée de façon sensiblement verticale par un premier flotteur immergé en subsurface, de préférence à au moins 50m de profondeur, auquel elle est reliée et
   b) une première conduite de liaison, de préférence une conduite flexible, assurant la liaison entre un support flottant et l'extrémité supérieure dudit riser vertical, et
2) au moins une deuxième conduite rigide remontant depuis le fond de la mer où elle repose, ou depuis une deuxième conduite sous-marine reposant au fond de la mer à laquelle son extrémité inférieure est reliée, jusqu'en subsurface où son extrémité supérieure est reliée à au moins respectivement une deuxième conduite de liaison, de préférence flexible, assurant sa liaison avec un même dit support flottant.

L'installation de WO2007/023233 est caractérisée en ce que l'extrémité supérieure de la (ou des) dite(s) deuxième(s) conduite(s) rigide(s) est reliée respectivement à un (ou des) deuxième(s) flotteur(s) situé(s) sensiblement à même profondeur que ledit premier flotteur et fixé(s) rigidement audit premier flotteur, de préférence l'un contre l'autre.

On entend ici par « fixé rigidement » que les 2 flotteurs sont rendus solidaires entre eux dans leurs mouvements par une liaison rigide, et qu'en particulier tout degré de liberté en rotation ou translation de l'un des flotteurs par rapport à l'autre est supprimé à la manière d'un encastrement.

On utilise ici le terme "riser vertical" pour rendre compte de la position théorique sensiblement verticale du riser lorsque celui-ci est au repos étant entendu que l'axe du riser peut connaître des mouvements angulaires par rapport à la verticale et se mouvoir dans un cône d'angle α dont le sommet correspond au point de fixation de l'extrémité inférieure du riser sur ladite embase.

Ce système de disposition et coopération de deux conduites rigides dont l'une est constituée d'un riser vertical et l'autre un riser de type SCR, avec chacune un flotteur propre au sommet et des ancrages indépendants permet de rapprocher les flotteurs sans risquer d'entrechoquement entre les 2 flotteurs dans leurs mouvements respectifs et permet en outre de fabriquer toute l'installation en mer depuis un navire de pose de conduite et de simplifier leur pose respective en mer et d'autre part leur confère une stabilité en opération de par la fixation mutuelle de leurs flotteurs, avec des mouvements identiques des seules extrémités supérieures et des flotteurs.

Dans WO2007/023233, il est prévu en outre que deux ensembles de 2 conduites rigides constituée d'un riser vertical et l'autre un riser de type SCR, reliés par des barres fixées rigidement à leurs flotteurs, sont reliés par un lien souple pour limiter leurs écarts l'un par rapport à l'autre.

Ce mode de réalisation ne peut pas être appliqué dans le cas de risers verticaux multiples cote à cote qui sont soumis à des mouvements en tête plus importants tant verticaux qu'angulaires ce qui entraine des efforts de couplage à reprendre au niveau des fixations rigides entre flotteurs excessifs, avec notamment des moments de flexions importants qui doivent être repris par les flotteurs. Or, les flotteurs sont des organes fragiles, il faut donc éviter de leur faire reprendre des efforts excessifs.

Il y a aussi des efforts verticaux à reprendre trop importants au niveau de l'accrochage rigide des deux flotteurs entre eux en cas de mouvements différentiés importants entre les deux risers et deux flotteurs en cas de mouvement sous l'effet des déplacements du support flottant et/ou de la houle, du vent et des courants ou dilatation différentié des deux risers parcourus par des fluides chauds ; en particulier lorsque les risers verticaux subissent des dilatations longitudinales différentielles du fait qu'ils véhiculent de fluides de températures différentes.

Lorsque les conduites sont des conduits coaxiales de type PIP, le problème de la dilatation différentielle est accru. Dans les conduites PIP, les effets de coaction l'une sur l'autre des deux conduites coaxiales découlant du fait que les deux conduites sont encastrées l'une sur l'autre, peut amener à multiplier les efforts de l'ensemble par deux.

Inversement, dans WO 2007/023233, le lien souple reliant deux ensembles de 2 conduites rigides constituée d'un riser vertical et l'autre un riser de type SCR, reliés par des barres fixées rigidement à leurs flotteurs, n'empêche pas le rapprochement l'un vers l'autres des ensembles de deux flotteurs risquant ainsi de s'entre choquer.

Le problème posé selon la présente invention est donc de fournir une installation avec une multiplicité de liaisons fond-surface à partir d'un même support flottant, dont les procédés de pose et de mise en place de l'installation permettent à la fois :
- de réduire la distance d'implantation entre les différentes liaisons fond-surface, c'est-à-dire permettent d'installer une pluralité de risers verticaux de liaisons fond-surface dans un espace le plus réduit possible ou en d'autres termes avec une emprise au sol réduite, ceci afin, entre autre, d'augmenter le nombre de liaisons fond-surface qu'il est possible d'installer le long du bordé d'un FPSO, sans que lesdites liaisons fond-surface n'interfèrent entre elles, et, ce sans risque d'entrechoquement des flotteur ou conduites entre elles sous l'effet des déplacements du support flottant et/ou de la houle, du vent et des courants, et
- une fabrication et mise en place aisée par fabrication et pose séquentielle des différentes conduites à partir d'un navire de pose en surface équipé d'une tour de pose en J, et enfin
- d'optimiser la mise en oeuvre des moyens de flottabilité dans le cas d'une mise en place étalée dans le temps sur une longue période de temps entre la mise en place des différentes liaisons fond-surface et ce, sans qu'il soit nécessaire de connaître au départ le nombre de liaisons qui sont à poser, ni leurs caractéristiques en termes de dimensions, et de poids unitaire.

En effet, lors de la phase d'ingénierie du développement d'un champ pétrolifère, le réservoir de pétrole n'est connu à ce stade que de manière incomplète, la production à plein régime impose alors bien souvent de reconsidérer, au bout de quelques années, les schémas initiaux de production et l'organisation des équipements associés. Ainsi, lors de l'installation du système initial, le nombre de liaisons fond-surface et leur organisation est défini par rapport à des besoins estimés, lesdits besoins étant de manière quasi-systématique revus à la hausse après la mise en production du champ, soit pour la récupération du pétrole brut, soit pour la nécessité d'injecter davantage d'eau dans le réservoir, soit encore pour récupérer ou réinjecter davantage de gaz. Au fur et à mesure de l'épuisement du réservoir, on est en général amené à forer de nouveaux puits pour réinjecter de l'eau ou du gaz, ou encore à forer des puits de production en de nouveaux endroits du champ, de manière à augmenter le taux de récupération global, ce qui complique d'autant l'ensemble des liaisons fond-surface reliées au bordé du FPSO.

Un autre problème posé selon la présente invention est de pouvoir réaliser et installer de telles liaisons fond-surface pour conduites sous-marines à grandes profondeurs, telles qu'au delà de 1 000 mètres par exemple, et de type comportant une tour hybride verticale et dont le fluide transporté doit être maintenu au dessus d'une température minimale jusqu'à son arrivée en surface, en réduisant au minimum les composants sujets à déperdition thermique, en évitant les inconvénients créés par l'expansion thermique propre, ou différentielle, des divers composants de ladite tour, de manière à résister aux contraintes extrêmes et aux phénomènes de fatigue cumulée sur la durée de vie de l'ouvrage, qui dépasse couramment 20 années.

Un autre problème de la présente invention est aussi de fournir une installation de liaisons fond-surface multiples avec des tours hybrides d'une grande résistance et d'un faible coût, et dont les procédés de fabrication et mise en place des différents éléments constitutifs soient simplifié et également d'un faible coût, et puisse être réalisé en mer depuis un navire de pose.

Pour ce faire la présente invention fournit une installation de liaisons fond-surface d'au moins deux conduites sous-marines reposant au fond de la mer, notamment à grande profondeur, notamment à profondeur de plus de 500m, comprenant au moins deux tours hybrides comprenant chacune :
a) une conduite rigide consistant en un riser vertical dont l'extrémité inférieure est fixée à une embase reposant ou ancrée au fond de la mer et reliée chacune à une conduite sous-marine reposant au fond de la mer et dont l'extrémité supérieure du riser est tensionnée de façon sensiblement verticale par un flotteur immergé en subsurface, de préférence à au moins 50m de profondeur par rapport à la surface, auquel elle est reliée, et
b) une conduite de liaison flexible, assurant la liaison entre un support flottant et l'extrémité supérieure dudit riser vertical, par l'intermédiaire d'un dispositif de jonction, de préférence de type col de cygne, disposé à l'extrémité supérieure dudit riser vertical,
caractérisée en ce que lesdites tours hybrides sont reliées entre elles par au moins une barre de séparation rigide de longueur d'au moins 1 fois le diamètre du flotteur de plus grand diamètre, de préférence au moins 10m de longueur et pas plus de 50m, de préférence de 20 à 35m, dont les extrémités de chaque dites barres de séparation sont fixées au niveau des extrémités supérieures des deux dits risers ou au niveau des deux dits flotteurs, par des dispositifs de fixation autorisant au moins une première rotation de ladite barre par rapport à un axe perpendiculaire (YY') à l'axe longitudinal (XX') de ladite barre de séparation et perpendiculaire à l'axe (ZZ') dudit flotteur ou de ladite extrémité supérieure de riser auquel ou respectivement à laquelle elle est fixée.

De préférence, le dispositif de fixation est un dispositif de fixation et articulation en rotation comprenant au moins un degré de liberté en rotation autorisant au moins une dite première rotation.

De préférence encore, pour réduire les efforts sur les structures, le dispositif de fixation et articulation comprend deux degrés de liberté en rotation autorisant :
a) une dite première rotation de ladite barre de séparation; et
b) une deuxième rotation de ladite barre de séparation par rapport à l'axe longitudinal (ZZ') dudit flotteur ou de ladite extrémité de riser auquel ou à laquelle elle est fixée.

Cette installation permet de conserver une distance suffisante entre les sommets des risers et/ou entre les flotteurs de tête afin d'éviter qu'ils ne s'entre choquent du fait des mouvements qu'ils subissent causés par les mouvements de la mer et/ou déplacements du support flottant. Ladite première rotation de la fixation articulée de ladite barre de séparation, autorise une liberté de mouvement en déplacements verticaux différentiés entre les deux sommets des risers et/ou entre les flotteurs de tête, et/ou des mouvements angulaires par rapport la verticale.

Du fait de la longueur des barres de séparation, et donc de leur inclinaison possible par rapport aux axes desdits flotteurs ou dits risers, les risers peuvent subir des mouvements verticaux et/ou d'élongations longitudinales différentiés suffisants en pratique.

Du fait que les deux risers et deux flotteurs sont localisés dans la même zone ils subissent des mouvements pendulaires ou angulaires qui tendent à rester sensiblement parallèles de sorte que ladite barre de séparation n'est pas soumis à des efforts de torsion sur elle-même, il n'apparait pas nécessaire de mettre en oeuvre un troisième degré de liberté en rotation par rapport son axe longitudinal.

En revanche, ladite deuxième rotation autorisée de ladite barre de séparation par rapport à l'axe longitudinal (ZZ') dudit flotteur ou de ladite extrémité de riser à laquelle elle est fixée, apparait particulièrement avantageuse en ce qu'elle autorise des mouvements des flotteurs de tensionnement ou des sommets risers sur eux-mêmes par rapport à leurs axes longitudinaux, ce qui est essentiel car du fait de leur forte tension les flotteurs de tensionnement et les sommets risers peuvent être soumis à des mouvements de rotation sur eux- mêmes de ce type.

Ce deuxième degré de liberté en rotation permet donc d'éviter que des efforts répétés de flexion ne doivent être repris au niveau dudit dispositif de fixation articulé.

Ainsi, l'installation selon la présente invention présente un encombrement et des mouvements réduits et une stabilité accrue par rapport aux liaisons fond-surface comportant l'association de 2 conduites de type risers verticaux (SHR) telles que décrites dans la technique antérieure pour lesquels l'espacement de sécurité entre deux risers verticaux dans ce type de configuration de tours hybrides doit être d'environ 50m.

Ce système de disposition et coopération de deux conduites rigides permet de conférer une stabilité en opération, avec des mouvements identiques des seules extrémités supérieures et des flotteurs contribuant aussi à la stabilisation des mouvements en tête de riser(s). La relative stabilité et les mouvements réduits de ces tours hybrides permettent d'installer desdits ensembles à des distances relativement rapprochées, permet de rapprocher les flotteurs ou sommets de risers sans risquer d'entrechoquement entre les 2 flotteurs dans leurs mouvements respectifs.

La longueur des barres de séparation selon l'invention permet de diviser par un facteur 2 à 4, la distance entre les risers par rapport aux distances usuelles dans l'état de l'art tout en maintenant une distance suffisante pour éviter les interférences et les chocs entre les parties plongeantes desdites conduites notamment les conduites flexibles.

Ce système de disposition et coopération de deux conduites rigides permet en outre de fabriquer toute l'installation en mer depuis un navire de pose de conduite et de simplifier leur pose respective en mer.

Plus particulièrement, ledit dispositif de fixation et articulation en rotation comprend :
- un étrier fixé rigidement à une extrémité de ladite barre de séparation, étrier supportant une tige cylindrique transversale formant l'axe de dite première rotation disposé perpendiculairement (YY') à l'axe longitudinal (XX') de ladite barre de séparation et perpendiculaire à l'axe (ZZ') dudit flotteur ou de ladite extrémité supérieure de riser à laquelle ladite barre de séparation est fixée, et
- un élément longitudinal en forme de doigt dont l'extrémité supérieure est traversée par ladite tige cylindrique transversale formant l'axe de dite première rotation et autour de laquelle ledit doigt est monté apte à se mouvoir en rotation librement, et
- une manchette formant fourreau comportant un orifice cylindrique apte à recevoir ledit doigt en autorisant la rotation dudit doigt sur lui-même selon son axe longitudinal coïncidant avec l'axe longitudinale dudit orifice cylindrique de la manchette disposé parallèlement à l'axe (ZZ') dudit flotteur ou de ladite extrémité supérieure de riser auquel ou respectivement à laquelle ladite manchette est fixée, ladite manchette comportant un moyen de retenu amovible apte à retenir doigt dans orifice cylindrique de ladite manchette.

Par « amovible », on entend ici que ledit moyen de retenu peut être actionné en retenue ou dé actionné à volonté, notamment à l'aide d'un Robot sous-marin de type ROV et/ou par simple poussée sur des moyens élastiques le supportant, pour permettre l'introduction ou la sortie dudit doigt.

Plus particulièrement, lesdits flotteurs ou respectivement dites extrémités supérieures desdits risers verticaux sont reliés entre eux ou entre elles par une pluralité de barres de séparation rigide de même longueur disposées parallèlement, de préférence de 2 à 10 barres, de préférence encore de 2 ou 3 barres.

De préférence, ladite barre de séparation est une tige creuse, de perforée dans sa direction longitudinale sur toute sa longueur ouverte à ses extrémités longitudinales et comportant en outre des perforations transversales autorisant le passage de l'eau en direction perpendiculaire à sa direction longitudinale.

Cette caractéristique permet de ne pas avoir à dimensionner la barre pour résister à l'effondrement (« collapse ») sous l'effet de la pression hydrostatique extérieure. Les petites perforations transversales visent à permettre de remplir l'eau à l'intérieur de la barre plus rapidement.

Dans une première variante de réalisation de l'Installation de liaison fond-surface selon l'invention, lesdites extrémités longitudinales de ladite barre de séparation sont fixées au niveau des parois externes cylindriques dits premier et respectivement deuxième flotteurs.

Dans une deuxième variante de réalisation de l'Installation, les extrémités longitudinales de ladite barre de séparation sont fixées au niveau d'une structure d'assemblage supportant dispositif de jonction de préférence de type col de cygne, disposé à l'extrémité supérieure dudit riser vertical et assurant sa jonction avec une dite conduite flexible, ladite structure d'assemblage étant de préférence constituée de poutres disposées en treillis.

Ce mode de réalisation est avantageux en ce que ladite structure d'assemblage et de support constituées de poutres disposées en treillis permet de reprendre les efforts liés aux tensions ou compression exercées par lesdites conduites rigides ou dits flotteurs sur le dispositif de jonction et éviter de les transférer en totalité au dit dispositif de jonction. On rappelle que la tension exercée par lesdits flotteurs pour une conduite de risers verticaux s'étendant sur plus de 1000m est d'au moins 500T de préférence au moins 1000T. En outre, la fixation à ladite structure d'assemblage permet d'éviter d'exercer des efforts au niveau desdits flotteurs qui sont des bidons de structure cylindriques creuse volumineuse relativement plus fragile. La taille des bidons est en général de 20 à 50m pour un diamètre de 4 à 8m.

On comprend que les deux extrémités de ladite barre sont fixées au niveau des parties de parois externes de chacun des deux flotteurs ou des parties desdites structures d'assemblage respectivement les plus proches l'une de l'autre en vis à vis.

Avantageusement, on cumule la mise en oeuvre de dites barres de séparation fixées de façon articulée au niveau desdits flotteurs et d'autres dites barres de séparation fixées de façon articulée au niveau desdites structures d'assemblage.

Plus particulièrement, lesdits flotteurs et/ou respectivement les extrémités supérieures desdits risers verticaux sont sensiblement à même hauteur par rapport au fonds de la mer et sont reliés entre eux par au moins deux barres de séparation rigide de même longueur disposées parallèlement et perpendiculairement aux axes desdits flotteurs et/ou respectivement des extrémités supérieures desdits risers, de préférence, les deux dites barres de séparation étant espacées d'une distance en hauteur d'au moins 1/5 de la hauteur desdits flotteurs et/ou respectivement d'une structure d'assemblage au niveau desdites extrémités supérieures desdits risers verticaux supportant lesdits dispositifs de jonction.

Ainsi, lorsque les risers sont au repos en position verticale, lesdites barres sont en position horizontale.

En pratique, la hauteur desdits flotteurs et dites structures d'assemblage est de 20 à 50m.

Plus particulièrement, l'Installation de liaison fond-surface selon l'invention comprend plus de deux tours hybrides et donc plus de 2 dits risers verticaux, notamment de 2 à 50 risers, préférentiellement de 2 à 10, encore préférentiellement de 2 à 5 les extrémités supérieures ou respectivement flotteurs de chaque risers vertical de chaque tour étant relié à au moins deux autres extrémités supérieures de risers ou respectivement deux autres flotteurs les plus proches, les conduites flexibles étant reliées à un même dit support flottant.

Plus particulièrement, l'une au moins de dites tour hybride comprend une conduite rigide sous forme de conduites coaxiales de type PIP.

Plus particulièrement, chaque dite tour hybride comprend un dispositif de liaison entre un dit flotteur d'une part et d'autre part l'extrémité supérieure dudit riser, comprenant :
- une portion de conduite souple dont les extrémités sont encastrées au niveau respectivement de la sous-face dudit flotteur et de l'extrémité supérieure dudit riser vertical,
- la liaison de ladite portion de conduite souple à l'extrémité supérieure dudit riser se faisant par l'intermédiaire d'un dispositif en forme de col de cygne, lequel dispositif en forme de col de cygne assure aussi la liaison entre ledit riser et une dite conduite de liaison flexible avec le support flottant, de préférence une dite conduite flexible,
- ladite portion de conduite souple étant de préférence prolongée à travers ledit flotteur par une portion de conduite tubulaire rigide traversant le flotteur de part en part, de sorte que l'on peut intervenir à l'intérieur dudit riser vertical à partir de la partie supérieure du flotteur à travers ladite portion conduite tubulaire rigide, puis à travers ledit dispositif en forme de col de cygne, de façon à accéder à l'intérieur dudit riser et le nettoyer par injection de liquide et /ou par raclage de la paroi interne dudit riser, puis accéder à ladite conduite sous-marine reposant au fond de la mer.

Plus particulièrement, la liaison entre l'extrémité inférieure dudit riser vertical et une dite conduite sous-marine reposant au fond de la mer se fait par l'intermédiaire d'une articulation à joint flexible laquelle autorise des mouvements angulaires (α) de ladite partie courante de riser par rapport à ladite portion de conduite terminale.

Plus particulièrement encore, ledit riser comprend à son extrémité inférieure une portion de conduite souple terminale, de préférence renforcée, reliée à la partie courante du riser par une dite articulation à joints flexibles qui autorise desdits mouvements angulaires de la partie courante du riser par rapport à ladite portion de conduite terminale, et ladite embase maintient rigidement en position verticale fixe ladite portion de conduite terminale dudit riser vertical à l'aide d'une structure solidaire de ladite embase.

Des liaisons de l'extrémité inférieure du riser à l'embase avec une articulation flexible de ce type ont été décrites notamment dans WO 02103153 et WO 02066786.

Plus particulièrement, la partie terminale de ladite conduite reposant au fond de la mer présente une courbure terminale en forme de coude, de préférence avec un grand rayon de courbure ; et l'extrémité inférieure de ladite portion terminale du riser vertical est reliée à l'extrémité supérieure de ladite courbure terminale de la conduite sous-marine reposant au fond, par un unique élément de raccordement entre ledit riser vertical et ladite conduite sous-marine reposant au fond, de préférence un connecteur automatique ; ladite embase maintient rigidement en position verticale fixe et reliées l'une à l'autre par l'intermédiaire dudit élément de raccordement :
- d'une part, ladite portion de conduite terminale dudit riser vertical et,
- d'autre part, ladite courbure terminale en forme de coude de ladite conduite sous-marine reposant au fond, celle-ci étant tournée vers le haut.

Plus particulièrement, la liaison entre l'extrémité inférieure dudit premier ou deuxième riser vertical et une dite première ou respectivement deuxième conduite sous-marine reposant au fond de la mer se fait par l'intermédiaire d'un système d'ancrage comprenant une embase posée et/ou ancrée au fond de la mer, et ledit riser vertical comprend à son extrémité inférieure une portion de conduite terminale, de préférence renforcée, reliée à la partie courante dudit riser vertical, et ladite embase maintient en position verticale fixe ladite portion de conduite terminale dudit riser vertical qui y est encastrée rigidement.

Des liaisons de l'extrémité inférieure du riser à l'embase avec un encastrement rigide de ce type ont été décrites notamment dans WO2009/138610.

Les embases des différents risers verticaux peuvent être une même embase commune ou des embases distinctes notamment du type comprenant des ancres à succion enfoncées dans le fond de la mer.

La présente invention fournit également un procédé de pose en mer d'une installation selon l'invention, caractérisé en ce qu'il comprend les étapes dans lesquelles :
1) on assemble depuis un navire de pose en surface un premier riser vertical que l'on descend et ancre au fond de la mer à une première embase et que l'on tensionne en tête par un premier flotteur immergé en subsurface, et l'on relie l'extrémité inférieure dudit riser à l'extrémité d'une dite première conduite sous-marine reposant au fond de la mer, et
2) on assemble depuis un navire de pose en surface une deuxième conduite rigide que l'on tensionne en tête par un deuxième flotteur immergé en subsurface, et on relie l'extrémité inférieure dudit deuxième riser à l'extrémité d'une deuxième conduite sous-marine reposant au fond de la mer, et
3) on relie l'un à l'autre lesdits premier et deuxième flotteurs ou respectivement les sommets desdits premier et deuxième risers, à l'aide de dites barres de séparation descendues par des câbles depuis navire de pose, et on fixe les extrémités longitudinales desdites barres de séparation par l'intermédiaire desdits dispositifs de fixation et articulation à l'aide d'un robot sous-marin, sur lesdits flotteurs et/ou sur des structures d'assemblage supportant desdits dispositifs de jonction au niveau des extrémités supérieures desdits risers, et
4) on pose lesdites première et deuxième conduites de liaison flexibles entre lesdites première et deuxième conduites rigides d'une part et un même dit support flottant d'autre part.

La présente invention permet de mettre en oeuvre un procédé d'exploitation de champ de pétrole à l'aide d'au moins une installation selon l'invention dans lequel on transfert des fluides comprenant du pétrole entre un support flottant et des conduites sous-marines reposant au fond de la mer.

Ladite conduite de liaison entre le support flottant et l'extrémité supérieure du riser vertical peut être :
- une conduite flexible ou à rigidité réduite si le flotteur de tête se trouve proche de la surface, ou
- une conduite en acier épais, donc rigide, si le flotteur de tête se trouve à grande profondeur.

De façon connue, lesdites conduites de liaison flexibles adoptent une courbure plongeante en forme de double chainette pour relier les conduites flexibles auxdites conduite rigide ou riser on intercale des dispositifs de type col de cygne connu de l'homme de l'art et dont un exemple amélioré est décrit dans FR 2 809 136 au nom de la demanderesse.

De façon connue, pour relier entre elles les différentes conduites on utilise des éléments de raccordement, notamment du type connecteurs automatiques, comprenant le verrouillage entre une partie mâle et une partie femelle complémentaire, ce verrouillage étant conçu pour se faire très simplement au fond de la mer à l'aide d'un robot sous-marin commandé depuis la surface (« ROV »), sans nécessiter une intervention directe manuelle de personnel.

D'autres caractéristiques et avantages de la présente invention apparaîtront à la lumière de la description détaillée de différents modes de réalisation qui va suivre, en référence aux figures 1 à 5 suivantes.
La figure 1 représente une vue schématique d'une installation selon la présente invention montrant deux tours risers reliés par deux barres de séparation au niveau de leurs flotteurs de tête.
La figure 2 est une vue de côté des deux flotteurs de tête reliés par deux barres de séparation 5 de la figure 1.
La figure 3A est une vue en coupe longitudinal de la barre montrant deux dispositifs de fixation et articulation 6 respectivement à chaque extrémité avec des détails montrant des perforations 5d au niveau de la paroi cylindrique 5-1.
La figure 3B est une vue de détail de la partie du dispositif de fixation et d'articulation 6 solidaire de l'extrémité de la barra de séparation en vue de côté.
La figure 3C est une vue en coupe montrant le doigt 6a du dispositif de fixation et d'articulation 6 inséré dans la manchette ou fourreau 6b du dispositif fixé au flotteur.
La figure 3D est une vue en coupe du dispositif de fixation et d'articulation en coupe perpendiculaire par rapport à l'axe longitudinal XX' de la barre au niveau de la jonction entre la barre de séparation et le dispositif.
La figure 4 est une vue d'un mode de réalisation montrant trois tours hybrides reliées entre elles par des paires de barres de séparation au niveau de leurs flotteurs.
La figure 5 est une vue d'un mode de réalisation dans lequel une barre de séparation 5 est montée au niveau de la structure d'assemblage 3 supportant le dispositif de jonction de type col de cygne 3-1, 3-2 entre la conduite flexible et la conduite rigide.

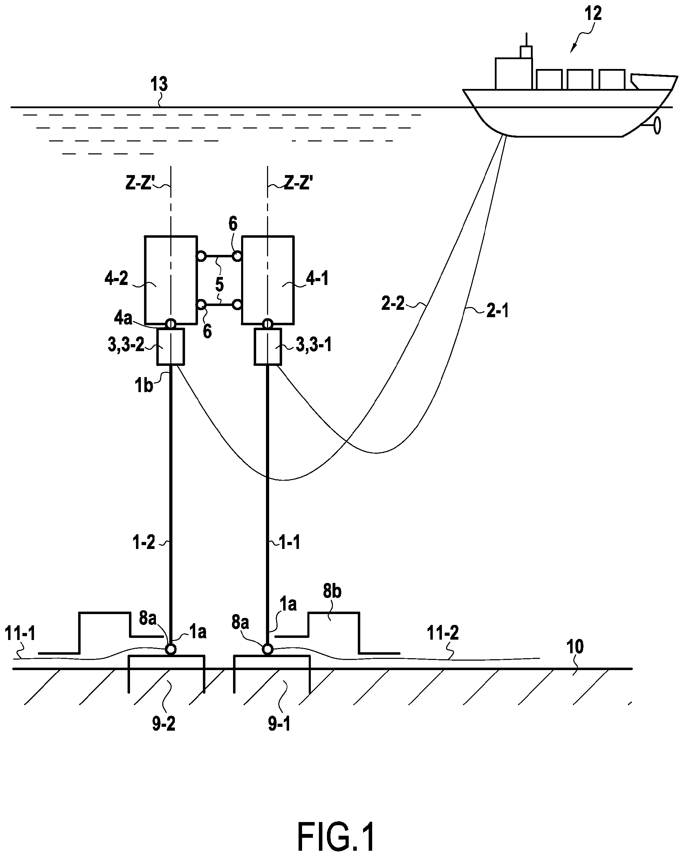

Sur la figure 1 on a représenté une installation selon la présente invention comprenant deux tours hybrides assurant la liaison entre un même support flottant 12 et deux conduites sous-marines 11-1, 11-2 reposant au fond de la mer 10.
Une première tour hybride comprend :
   a1) une première conduite rigide 1-1 consistant en un premier riser vertical dont l'extrémité inférieure la est fixée à une articulation flexible 8a, elle-même solidaire d'une première embase 9-1 ancrée au fond de la mer 10 et reliée à une première conduite sous-marine 11-1 reposant au fond de la mer et dont l'extrémité supérieure 1b du riser est tensionnée de façon sensiblement verticale par un premier flotteur 4-1 auquel elle est reliée, immergé en subsurface, de préférence à au moins 100m de profondeur par rapport à la surface 13, et
   b1) une première conduite de liaison flexible 2-1, assurant la liaison entre un support flottant 12 et l'extrémité supérieure 1b dudit premier riser vertical, par l'intermédiaire d'un premier dispositif de jonction 3-1, de type col de cygne, disposé à l'extrémité supérieure 1b dudit premier riser vertical, et
2) au moins une deuxième tour hybride comprenant :
   a2) une deuxième conduite rigide 1-2, 1-3 consistant en un deuxième riser vertical dont l'extrémité inférieure est fixée à une embase 9-2 ancrée au fond de la mer (10) et reliée à une deuxième conduite sous-marine 11-2 reposant au fond de la mer et dont l'extrémité supérieure est tensionnée de façon sensiblement verticale par un deuxième flotteur 4-2, immergé en subsurface, à au moins 50m de profondeur, auquel elle est reliée, et
   b2) une deuxième conduite de liaison flexible assurant la liaison entre un même dit support flottant 12 et l'extrémité supérieure dudit deuxième riser vertical, par l'intermédiaire d'un deuxième dispositif de jonction 3-2, 3-3, de préférence de type col de cygne, disposé à l'extrémité supérieure 1b dudit deuxième riser vertical.

Lesdits premier et deuxième risers verticaux sont reliés entre eux par deux barres de séparation rigides 5 de longueur d'au moins 1 fois le diamètre du flotteur de plus grand diamètre, de préférence de longueur d'au moins 3 fois le diamètre du flotteur de plus grand diamètre mais inférieur à la hauteur des flotteurs soit de pas plus de 35 m, de préférence de 20 à 30m. Les extrémités longitudinales 5a des barres de séparation 5 sont fixées à proximité des extrémités supérieures et inférieures desdits premier et deuxième flotteurs 2, par des dispositifs d'articulation en rotation 6 décrits ci-après.

Pour chaque conduite rigide, le riser vertical comprend à son extrémité inférieure une portion de conduite terminale de préférence renforcée (non représentée), reliée à la partie courante dudit riser vertical par un joint flexible 8a lequel autorise des mouvements angulaires α de ladite partie courante de riser par rapport à ladite portion de conduite terminale. Et, ladite embase 9-1, 9-2 supporte une structure 8b maintenant rigidement en position verticale fixe ladite portion de conduite terminale dudit riser vertical comme décrit par exemple dans les brevets WO 02103153 et WO 02066786.

Lesdites premières et deuxièmes conduites flexibles sont du type à double chainettes plongeantes (connu sous l'appellation « flexible jumper »).

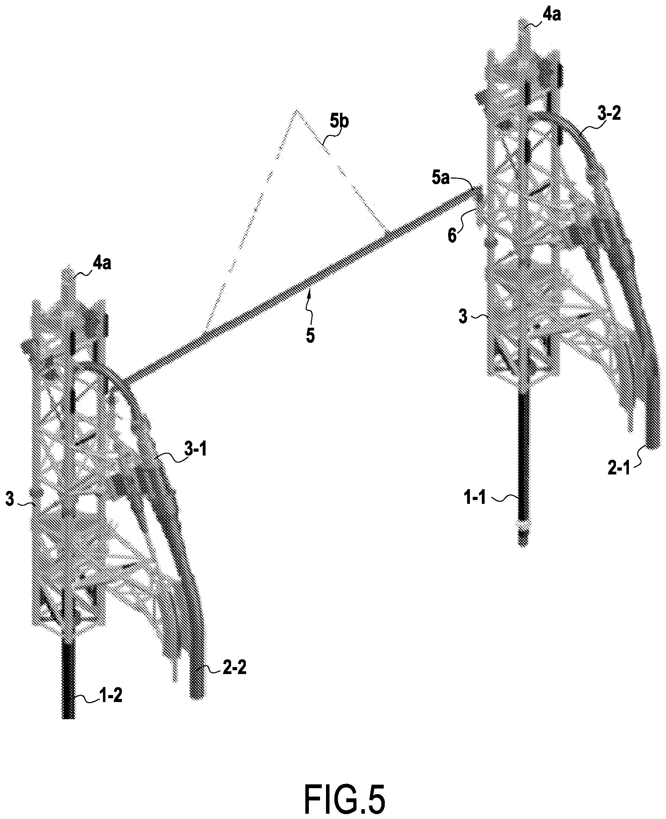

D'autre part, dans la mesure ou les dispositifs de type col de cygne 3-1, 3-2 (connu aussi sous la dénomination « goose neck ») sont relativement fragiles, on met en oeuvre au niveau de l'assemblage entre l'extrémité supérieur du riser et les flotteurs d'une part et, d'autre part, entre l'extrémité supérieure 1b du riser et l'extrémité de chaque conduite flexible, une structure d'assemblage 3 constituée de poutres disposée en treillis (comme montré sur la figure 5) qui sert à reprendre des efforts de couplage au niveau de l'assemblage pour soulager le dispositif de jonction du type « col de cygne ».

L'installation comprend des dispositifs de liaison 4a entre lesdits premiers et deuxièmes flotteurs d'une part et d'autre par les extrémités supérieures desdits premiers et respectivement deuxièmes risers comprenant une portion de conduite souple dont les extrémités sont encastrées au niveau respectivement de la sous-face dudit premier ou respectivement deuxième flotteur et de l'extrémité supérieure dudit premier ou respectivement deuxième riser vertical.

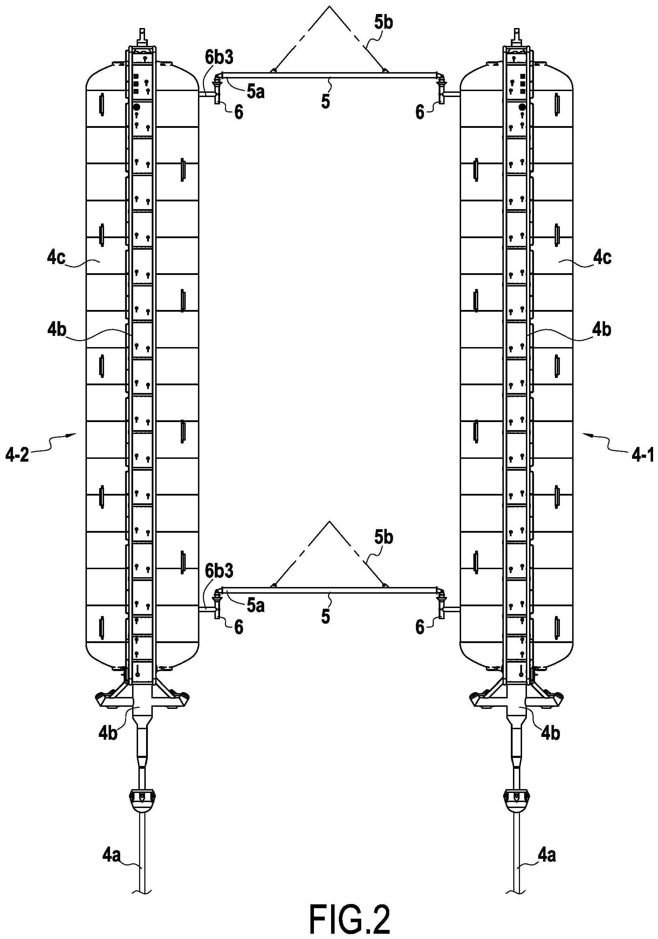

Ladite portion de conduite souple 4a est prolongée à travers ledit premier ou respectivement deuxième flotteur par une portion de conduite tubulaire rigide 4b traversant le flotteur de part en part, comme montrées sur la figure 2 de sorte que l'on peut intervenir à l'intérieur dudit premier ou respectivement deuxième riser vertical à partir de la partie supérieure du flotteur à travers ladite portion conduite tubulaire rigide, puis à travers ledit dispositif en forme de col de cygne, de façon à accéder à l'intérieur dudit riser et le nettoyer par injection de liquide et /ou par raclage de la paroi interne dudit riser, puis accéder à ladite conduite sous-marine reposant au fond de la mer.

Lesdits premier et deuxième flotteurs et les sommets desdits premier et deuxième risers verticaux sont sensiblement à même hauteur par rapport au fonds de la mer 10. Les deux premier et deuxième flotteurs sont reliés entre eux par deux barres de séparation rigides 5 de même longueur disposées parallèlement sensiblement horizontalement, perpendiculairement aux axes ZZ' desdits premier et deuxième flotteurs et/ou respectivement des extrémités supérieures 1b desdits premier et deuxième risers, les deux barres étant situées à proximité des extrémités supérieures et respectivement des extrémités inférieures desdits flotteurs 4-1, 4-2 de manière à être espacés d'une distance en hauteur d'au moins de 1/5eme de la hauteur desdits flotteurs, par exemple une distance de la moitié de la hauteur des flotteurs.

Lesdits premier et deuxième flotteurs 4-1, 4-2 ont une longueur de 20 à 50m et un diamètre de 4 à 8m.

Les barres de séparation rigides 5 ont par exemple une longueur de 10 à 50 mètres, de préférence de 20 à 35 m.

Les barres de séparation 5 sont reliées aux dits flotteurs par des dispositifs de fixation par articulation en rotation 6 comprenant deux degrés de liberté en rotation autorisant (a) une première rotation de de ladite barre par rapport à un axe perpendiculaire YY' à l'axe longitudinal XX' de ladite barre de séparation et perpendiculaire à l'axe ZZ' dudit flotteur et (b) une deuxième rotation de ladite barre de séparation par rapport à l'axe longitudinal ZZ' dudit flotteur, cette deuxième rotation étant recommandable pour réduire les efforts sur les structures.

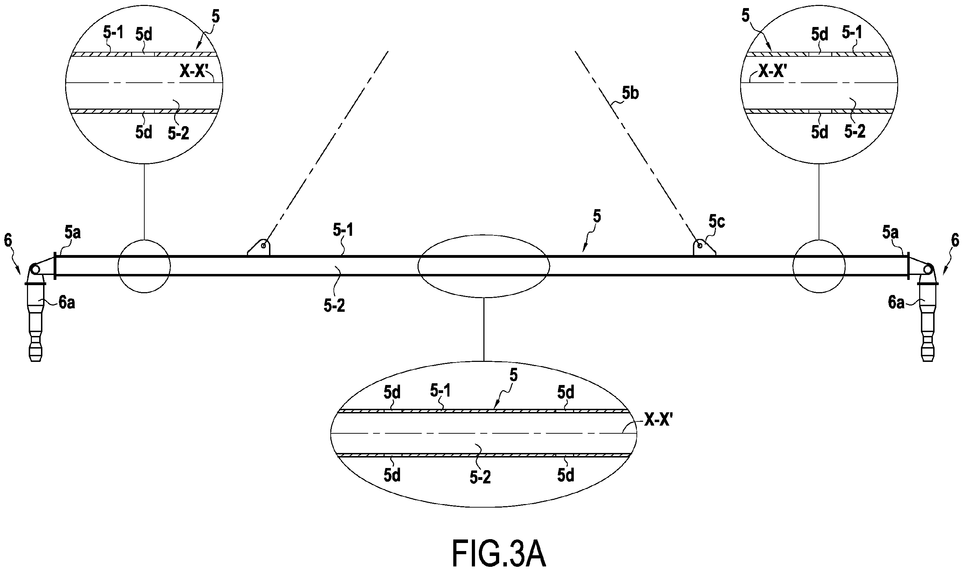

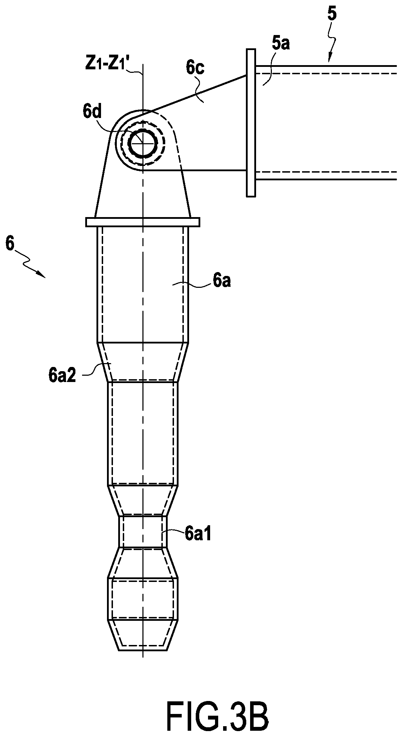

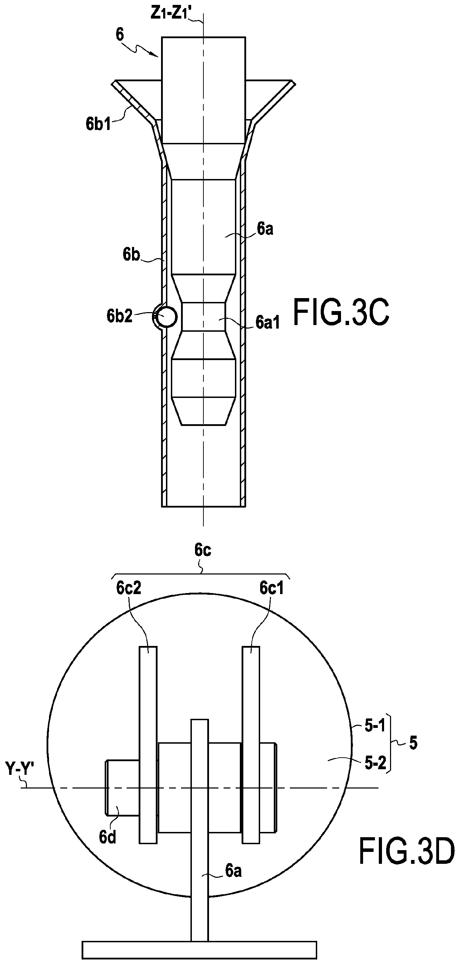

Sur la figure 3, on montre que la barre rigide 5 est une barre creuse dont l'espace interne 5-2 vide peut ainsi être entièrement rempli d'eau du fait qu'il débouche sur ses extrémités longitudinales 5a ouvertes. Avantageusement, la barre 5 comprend également des perforations latérales 5d dans sa paroi cylindrique 5-1 permettant de faciliter le remplissage de la barre creuse en eau et le passage de l'eau du à des courants dans une direction transversale perpendiculaire à la direction longitudinale de la barre.

Typiquement la barre 5 présente un diamètre de 1 à 30cm.

Sur la figure 2, la tige de liaison 6b3 de la manchette 6b avec le flotteur assure une liaison entre la manchette 6b et la portion de conduite rigide centrale 4b traversant le flotteur dans sa direction longitudinale. La tige de liaison 6b3 traversant donc l'intérieur de l'espace du flotteur entre la portion de conduite rigide 4b et sa surface cylindrique périphérique dans sa partie courante 4c.

Les barres de séparation 5 sont équipées de câble de manutention 5b permettant leur installation via des dispositifs de levage et de descente depuis un navire de pose en surface et à l'aide d'un robot sous-marin commandé à distance (« ROV ») de manière à faciliter l'introduction des doigts 6a à l'intérieur des manchettes 6b.

Le dispositif de fixation articulée en rotation 6 est décrit sur les figures 3A à 3D. Un étrier 6c comprend deux platines parallèles 6c1, 6c2 disposées dans un plan XZ fixées rigidement à une extrémité de ladite barre de séparation au niveau de l'extrémité ouverte de sa paroi cylindrique 5-1. Lesdites platines 6c1, 6c2 supportent une tige cylindrique transversale 6d s'étendant entre les deux platines 6c1 et 6c2. Un tel dispositif de fixation et d'articulation 6 comprend une première partie solidaire de l'extrémité longitudinale de ladite barre de séparation, ladite première partie comprenant ledit doigt 6a, et une deuxième partie comprenant ladite manchette 6b solidaire d'un dit flotteur ou d'une structure d'assemblage 3 décrite ci-après. Comme montré sur la figure 3, chaque barre de séparation 5 comprend :
- une dite première partie respectivement à chacune de ses deux extrémités longitudinal 5a formant l'axe de dite première rotation disposé perpendiculairement YY' à l'axe longitudinal XX' de ladite barre de séparation et perpendiculaire à l'axe ZZ' dudit flotteur, et
- un élément longitudinal en forme de doigt 6a dont l'extrémité supérieure est traversée par ladite tige cylindrique transversale 6d formant l'axe de dite première rotation et autour de laquelle le doigt 6a est monté apte à se mouvoir en rotation librement, et
- une manchette 6b dont la partie courante présente une forme cylindrique formant fourreau comportant un orifice cylindrique apte à recevoir le doigt 6a en autorisant la rotation dudit doigt sur lui-même selon son axe longitudinal Z1-Z1' coïncidant avec l'axe longitudinale dudit orifice cylindrique de la manchette, disposé parallèlement à l'axe ZZ' dudit flotteur auquel ladite manchette est fixée par l'intermédiaire d'une tige 6b3. Ladite manchette comporte un moyen de retenu 6b2 amovible apte à retenir le doigt dans l'orifice cylindrique de ladite manchette.

Comme montré sur la figure 3C, la manchette 6b comprend une extrémité supérieure évasée en forme d'entonnoir 6b1 pour faciliter l'introduction dudit doigt à l'intérieur de ladite manchette. Le doigt 6a présente une forme allongée définie par des surfaces de révolution d'axe Z1-Z1', comportant dans sa longueur une zone de diamètre réduit par rapport un diamètre de sa partie courante formant un creux 6a1 apte à coopérer avec un moyen de butée ou de retenue 6b2.

Ce moyen de retenue 6b2 est désengagé ou en position de retrait libérant l'espace intérieure du fourreau 6b pour permettre l'introduction de la partie courante de plus grand diamètre du doigt 6a à l'intérieur du fourreau 6b. Puis, une fois que le doigt 6a a été introduit à l'intérieur du fourreau 6b, le moyen de butée ou de retenue 6b2 est engagé ou actionné en extension à l'intérieur de l'espace interne du fourreau 6b au niveau du creux 6a1 du doigt pour empêcher le doigt de coulisser à l'intérieur du fourreau et ainsi solidariser lesdites première et deuxième parties du dispositif de fixation et d'articulation 6.

Le positionnement du moyen de butée 6b2 en vis-à-vis de la partie creuse 6a1 du doigt est contrôlée du fait qu'à l'extrémité supérieure du doigt, sa surface externe présente une surface tronconique 6a2 en entonnoir 6b apte à être retenue par la partie en entonnoir 6b1 à l'extrémité supérieure de la manchette 6b.

Le moyen de retenue 6b2 n'empêche pas la rotation du doigt 6a1 autour de son axe Z1-Z1' lorsque celui-ci est inséré à l'intérieur du fourreau 6b en position de retenue. La coopération du doigt 6a et la manchette 6b autorise donc une dite deuxième rotation de la barre de séparation dans un plan horizontal.

Ainsi, en cas de décalage angulaire entre les sommets des deux risers dans leurs mouvements liés à la houle, aux vagues, au courant sous-marin, ou des déplacements ou mouvements du supports flottant 12, la barre de séparation 5 est autorisée à se mouvoir en rotation autour dudit axe Z1-Z1' ce qui évite les reprises d'efforts de moments de flexion au niveau de l'étrier 6c le cas échéant.

Surtout, cette liberté de rotation de la barre de séparation par rapport à l'axe longitudinal Z1-Z1' du doigt et donc par rapport à l'axe longitudinal ZZ' dudit flotteur autorise également les rotations de long de l'axe ZZ' dudit flotteur lié au phénomène explicité ci-avant.

La rotation de la barre de séparation par rapport à la tige cylindrique transversale 6d autorise une dite première rotation dans un plan vertical de ladite barre de séparation. Ladite première rotation de la barre dans un plan vertical est d'autant plus importante que la barre est courte.

Cette première rotation est importante car les mouvements les plus importants des sommets de risers et donc des deux flotteurs respectifs sont des différences de hauteur liées à la houle, ou au courant sous-marin, ou des mouvements du supports flottant 12 ou encore des dilatations de risers différenciées entre les deux risers liées aux fluides chaud qu'il véhiculent.

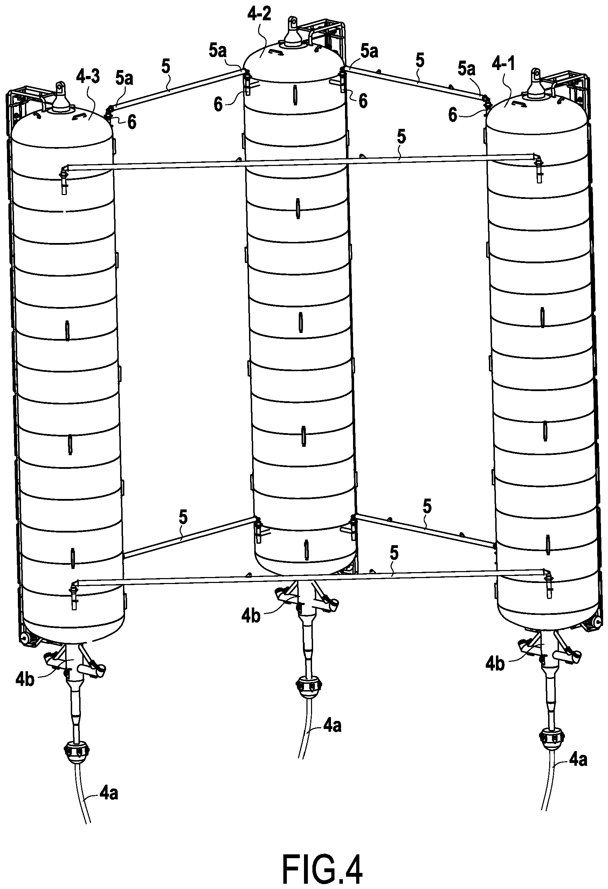

Sur la figure 4 on a représenté un mode de réalisation F dans lequel trois tours hybrides sont reliées entre elles au niveau des flotteurs de tête à savoir que ledit premier flotteur 4-1 et ledit deuxième flotteur 4-2 sont également relié par l'intermédiaire de deux barres de séparation 5 à un troisième flotteur 4-3 au sommet du troisième riser 1-3 relié à une troisième conduite flexible 2-3 par l'intermédiaire d'un troisième dispositif de jonction du type col de cygne 3-3. Ainsi, chacun des trois flotteurs est relié à deux autres flotteurs par deux barres de séparation 5.

Dans un mode de réalisation non représenté, chacun des flotteurs peut être en outre relié à un flotteur additionnel en tête d'une tour hybride additionnelle disposée au centre de la figure géométrique en section dans un plan horizontal notamment du polygone notamment un carré plus particulièrement, on mettra en oeuvre quatre flotteurs périphériques disposés en carré autour d'un flotteur central, chaque flotteur en périphérie étant relié à trois autres flotteurs les plus proches et le flotteur central étant relié aux quatre flotteurs périphériques.

Sur la figure 5, on a représenté une structure d'assemblage constitué de poutres en treillis 3a supportant les dispositifs de dit col de cygne 3 et reprenant les efforts de couplage entre le riser vertical et la conduite flexible d'une part et entre le dispositif de jonction 3 et le flotteur d'autre part. Avantageusement on couple des barres de liaison au niveau du flotteur avec au moins une barre de liaison additionnelle au niveau de ladite structure d'assemblage 3a au sommet de chacun desdits risers verticaux 1-1, 1-2.

## Revendications

1. Installation de liaisons fond-surface d'au moins deux conduites sous-marines (11-1, 11-2) reposant au fond de la mer (10), notamment à profondeur de plus de 500m, comprenant au moins deux tours hybrides comprenant chacune :
a) une conduite rigide (1-1, 1-2) consistant en un riser vertical dont l'extrémité inférieure (1a) est fixée à une embase (9-1, 9-2) reposant ou ancrée au fond de la mer (10) et reliée chacune à une conduite sous-marine (11-1, 11-2) reposant au fond de la mer et dont l'extrémité supérieure (1b) du riser est tensionnée de façon sensiblement verticale par un flotteur (4-1, 4-2) immergé en subsurface, de préférence à au moins 50m de profondeur par rapport à la surface (13), auquel elle est reliée, et
b) une conduite de liaison flexible (2-1, 2-2), assurant la liaison entre un support flottant (12) et l'extrémité supérieure (1b) dudit riser vertical, par l'intermédiaire d'un dispositif de jonction (3-1, 3-2), de préférence de type col de cygne, disposé à l'extrémité supérieure (1b) dudit riser vertical,
**caractérisée en ce que** les deux dites tours hybrides sont reliées entre elles par au moins une barre de séparation rigide (5) de longueur d'au moins 1 fois le diamètre du flotteur de plus grand diamètre, les extrémités longitudinales (5a) de chaque dite barre de séparation (5) étant fixées au niveau des deux extrémités supérieures (1b) desdits risers ou au niveau des deux dits flotteurs, par des dispositifs de fixation autorisant au moins une première rotation de ladite barre par rapport à un axe perpendiculaire (YY') à l'axe longitudinal (XX') de ladite barre de séparation et perpendiculaire à l'axe (ZZ') dudit flotteur ou de ladite extrémité supérieure de riser auquel ou respectivement à laquelle elle est fixée.

2. Installation de liaison fond-surface selon la revendication 1, **caractérisée en ce que** le dispositif de fixation est un dispositif de fixation et articulation en rotation (6) comprenant au moins un degré de liberté en rotation autorisant au moins une dite première rotation.

3. Installation de liaison fond-surface selon la revendication 2, **caractérisée en ce que** le dispositif de fixation et articulation comprend deux degrés de liberté en rotation autorisant :
a) une dite première rotation de ladite barre de séparation (5), et
b) une deuxième rotation de ladite barre de séparation (5) par rapport à l'axe longitudinal (ZZ') dudit flotteur ou de ladite extrémité de riser auquel ou à laquelle elle est fixée.

4. Installation de liaison fond-surface selon la revendication 2 ou 3, **caractérisée en ce que** ledit dispositif de fixation et articulation en rotation (6) comprend :
- un étrier (6c) fixé rigidement à une extrémité de ladite barre de séparation, étrier supportant une tige cylindrique transversale (6d) formant l'axe de dite première rotation disposé perpendiculairement (YY') à l'axe longitudinal (XX') de ladite barre de séparation et perpendiculaire à l'axe (ZZ') dudit flotteur ou de ladite extrémité supérieure de riser à laquelle ladite barre de séparation est fixée, et
- un élément longitudinal en forme de doigt (6a) dont l'extrémité supérieure est traversée par ladite tige cylindrique transversale (6d) formant l'axe de dite première rotation et autour de laquelle ledit doigt (6a) est monté apte à se mouvoir en rotation librement, et
- une manchette formant fourreau (6b) comportant un orifice cylindrique apte à recevoir ledit doigt en autorisant la rotation dudit doigt sur lui-même selon son axe longitudinal coïncidant avec l'axe longitudinale dudit orifice cylindrique de la manchette disposé parallèlement à l'axe (ZZ') dudit flotteur ou de ladite extrémité supérieure de riser auquel ou respectivement à laquelle ladite manchette est fixée, ladite manchette comportant un moyen de retenu (6b2) amovible apte à retenir ledit doigt dans ledit orifice cylindrique de ladite manchette.

5. Installation de liaison fond-surface selon l'une des revendications 1 à 4, **caractérisée en ce que** lesdits flotteurs (4-1, 4-2) ou respectivement dites extrémités supérieures (1a) desdits risers verticaux (1-1, 1-2) sont reliés entre eux ou respectivement entre elles par une pluralité de barres de séparation rigide (5) de même longueur disposées parallèlement, de préférence de 2 à 10 barres, de préférence encore de 2 ou 3 barres.

6. Installation de liaison fond-surface selon l'une des revendications 1 à 5, **caractérisée en ce que** ladite barre de séparation est une tige creuse, perforée (5-2) dans sa direction longitudinale sur toute sa longueur ouverte à ses extrémités longitudinales et comportant en outre des perforations transversales (5d) autorisant le passage de l'eau en direction perpendiculaire à sa direction longitudinale.

7. Installation de liaison fond-surface selon l'une des revendications 1 à 6, **caractérisée en ce que** lesdites extrémités longitudinales (5a) de ladite barre de séparation sont fixées au niveau des parois externes cylindriques de dits flotteurs.

8. Installation de liaison fond-surface selon l'une des revendications 1 à 6, **caractérisée en ce que** les extrémités longitudinales (5a) de ladite barre de séparation sont fixées au niveau d'une structure d'assemblage (3), supportant un dispositif de jonction (3-1, 3-2), de préférence de type col de cygne, disposé à l'extrémité supérieure (1b) dudit riser vertical (1-1, 1-2) et assurant sa jonction avec une dite conduite flexible (2-1, 2-2), ladite structure d'assemblage étant de préférence constituée de poutres disposées en treillis (3).

9. Installation de liaison fond-surface selon la revendication 7 ou 8, **caractérisée en ce qu'**elle comprend desdites barres de séparation (5) fixées de façon articulée au niveau desdits flotteurs (4-1, 4-2) et d'autres dites barres de séparation (5) fixées de façon articulée au niveau desdites structures d'assemblage (3).

10. Installation de liaison fond-surface selon la revendication 7,8 ou 9, **caractérisée en ce que** lesdits flotteurs (4-1, 4-2) et/ou respectivement les extrémités supérieures (1b) dits risers verticaux (1-1, 1-2) sont sensiblement à même hauteur par rapport au fonds de la mer et sont reliés entre eux par au moins deux barres de séparation rigide (5) de même longueur disposées parallèlement et perpendiculairement aux axes desdits flotteurs et/ou respectivement des extrémités supérieures desdits risers, de préférence les deux dites barres de séparation étant espacées d'une distance en hauteur d'au moins 1/5ème de la hauteur desdits flotteurs et/ou respectivement d'une structure d'assemblage (3) au niveau desdites extrémités supérieures (1b) desdits risers verticaux supportant lesdits dispositifs de jonction (3-1, 3-2).

11. Installation de liaison fond-surface selon l'une des revendications 1 à 10, **caractérisée en ce qu'**elle comprend plus de deux tours hybrides et donc plus de 2 dits risers verticaux (1-1, 1-2, 1-3), notamment de 2 à 50 risers, préférentiellement de 2 à 10, encore préférentiellement de 2 à 5 les extrémités supérieures ou respectivement flotteurs de chaque risers vertical de chaque tour étant relié à au moins deux autres extrémités supérieures de risers ou respectivement deux autres flotteurs de risers les plus proches, les conduites flexibles (2-1, 2-2, 2-3) étant reliées à un même dit support flottant.

12. Installation de liaison fond-surface selon l'une des revendications 1 à 11, **caractérisée en ce que** l'une au moins de dites tour hybride comprend une conduite rigide sous forme de conduites coaxiales de type PIP.

13. Installation de liaison fond-surface selon l'une des revendications 1 à 12, **caractérisée en ce que** chaque tour hybride comprend un dispositif de liaison (4a) entre un dit flotteur d'une part et d'autre part l'extrémité supérieure dudit riser (1b), comprenant :
- une portion de conduite souple dont les extrémités sont encastrées au niveau respectivement de la sous-face dudit flotteur et de l'extrémité supérieure dudit riser vertical,
- la liaison de ladite portion de conduite souple (4a) à l'extrémité supérieure dudit riser se faisant par l'intermédiaire d'un dispositif en forme de col de cygne (3-1, 3-2), lequel dispositif en forme de col de cygne assure aussi la liaison entre ledit riser (1-1, 1-2) et une dite conduite de liaison flexible (2-1, 2-2) avec le support flottant,
- ladite portion de conduite souple (4a) étant de préférence prolongée à travers ledit flotteur par une portion de conduite tubulaire rigide (4b) traversant le flotteur de part en part, de sorte que l'on peut intervenir à l'intérieur dudit riser vertical à partir de la partie supérieure du dudit flotteur à travers ladite portion conduite tubulaire rigide (4b), puis à travers ledit dispositif en forme de col de cygne (3-1, 3-2, 3-3), de façon à accéder à l'intérieur dudit riser, puis accéder à ladite conduite sous-marine (11-1, 11-2) reposant au fond de la mer (10).

14. Installation de liaison fond-surface selon l'une des revendications 1 à 12, **caractérisée en ce que** la liaison entre l'extrémité inférieure (1a) dudit riser vertical (1-1, 1-2) et une dite conduite sous-marine (11-1, 11-2) reposant au fond de la mer (10) se fait par l'intermédiaire d'une articulation à joint flexible (8a) laquelle autorise des mouvements angulaires (α) du riser.

15. Installation selon la revendication 14, **caractérisée en ce que** ledit riser comprend à son extrémité inférieure (1a) une portion de conduite terminale, de préférence renforcée, reliée à la partie courante du riser par une dite articulation à joint flexible (8a) qui autorise desdits mouvements angulaires de la partie courante du riser par rapport à ladite portion de conduite terminale, et ladite embase (9-1, 9-2) maintient rigidement en position verticale fixe ladite portion de conduite terminale (5-1) dudit riser vertical à l'aide d'une structure (8b) solidaire de ladite embase (9-1, 9-2).

16. Installation de liaison fond-surface selon l'une des revendications 1 à 15, **caractérisée en ce que** la longueur de la barre de séparation est d'au moins 3 fois le diamètre du flotteur de plus grand diamètre mais inférieur à la hauteur des flotteurs, de préférence de pas plus de 35 m, de préférence de 20 à 30m.

17. Procédé de pose en mer d'une installation selon l'une des revendications 1 à 16, **caractérisé en ce qu'**il comprend les étapes dans lesquelles :
1) on assemble depuis un navire de pose (14) en surface (13) un premier riser vertical (1-1) que l'on descend et ancre au fond de la mer à une première embase (9-1) et que l'on tensionne en tête par un premier flotteur (4-1) immergé en subsurface, et l'on relie l'extrémité inférieure dudit riser à l'extrémité d'une dite première conduite sous-marine (11-1) reposant au fond de la mer (10), et
2) on assemble depuis un navire de pose (14) en surface (13) une deuxième conduite rigide (1-2) que l'on tensionne en tête par un deuxième flotteur (4-2) immergé en subsurface, et on relie l'extrémité inférieure dudit deuxième riser à l'extrémité d'une dite deuxième conduite sous-marine (11-2) reposant au fond de la mer, et
3) on relie l'un à l'autre lesdits premier et deuxième flotteurs ou respectivement les sommets desdits premier et deuxième risers, à l'aide de dites barres de séparation (5) descendues par des câbles (5b) depuis le navire de pose et on fixe les extrémités longitudinales desdites barres de séparation (5) par l'intermédiaire desdits dispositifs de fixation et articulation (6) à l'aide d'un robot sous-marin, sur lesdits flotteurs et/ou sur des structures d'assemblage (3) supportant desdits dispositifs de jonction (3-1, 3-2) au niveau des extrémités supérieures (1b) desdits risers, et
4) on pose des première et deuxième conduites de liaison flexibles (4a, 4b) entre les extrémités supérieures (1b) desdites première et deuxième conduites rigides d'une part et un même dit support flottant (12) d'autre part.

## Patentansprüche

1. Anlage zum Verbinden von Seeboden und Oberfläche mit mindestens zwei Unterwasserleitungen (11-1, 11-2), die auf dem Meeresboden (10) ruhen, insbesondere in einer Tiefe von mehr als 500 m, umfassend mindestens zwei Hybridtürme, die jeweils umfassen:
a) eine starre Leitung (1-1, 1-2), die aus einem vertikalen Steigrohr besteht, dessen unteres Ende (1a) an einer Basis (9-1, 9-2) befestigt ist, die auf dem Meeresboden (10) aufliegt oder mit diesem verankert ist, und jeweils mit einer Unterwasserleitung (11-1, 11-2) verbunden ist, die auf dem Meeresboden aufliegt, und dessen oberes Ende (1b) im Wesentlichen vertikal durch einen oberflächennah eingetauchten Schwimmer (4-1, 4-2), vorzugsweise mindestens 50 m tief in Bezug auf die Oberfläche (13), mit der es verbunden ist, gespannt wird, und
b) eine flexible Verbindungsleitung (2-1, 2-2), die die Verbindung zwischen einem schwimmenden Träger (12) und dem oberen Ende (1b) des vertikalen Steigrohrs mittels einer Verbindungsvorrichtung (3-1, 3-2), vorzugsweise vom Typ Schwanenhals, die am oberen Ende (1b) des vertikalen Steigrohrs angeordnet ist, gewährleistet,
**dadurch gekennzeichnet, dass** die beiden Hybridtürme durch mindestens einen starren Trennsteg (5) miteinander verbunden sind, dessen Länge mindestens das Einfache des Durchmessers des Schwimmers mit dem größeren Durchmesser beträgt, wobei die Längsenden (5a) jedes Trennstegs (5) an den beiden oberen Enden (1b) der Steigrohre oder an den beiden Schwimmern befestigt sind, und zwar durch Befestigungsvorrichtungen, die mindestens eine erste Drehung des Stegs in Bezug auf eine Achse (YY') zulassen, die senkrecht zur Längsachse (XX') des Trennstegs und senkrecht zur Achse (ZZ') des Schwimmers bzw. des oberen Endes des Steigrohrs verläuft, an dem er jeweils befestigt ist.

2. Anlage zum Verbinden von Seeboden und Oberfläche nach Anspruch 1, **dadurch gekennzeichnet, dass** es sich bei der Befestigungsvorrichtung um eine Befestigungs- und Drehgelenkvorrichtung (6) handelt, die mindestens einen Freiheitsgrad der Rotation aufweist, der mindestens eine der besagten ersten Drehung ermöglicht.

3. Anlage zum Verbinden von Seeboden und Oberfläche nach Anspruch 2, **dadurch gekennzeichnet, dass** die Befestigungs- und Gelenkvorrichtung zwei Freiheitsgrade der Drehung umfasst, die zulassen:
a) eine erste Drehung des Trennstegs (5) und
b) eine zweite Drehung des Trennstegs (5) in Bezug auf die Längsachse (ZZ') des Schwimmers oder des Steigrohrendes, an dem er befestigt ist.

4. Anlage zum Verbinden von Seeboden und Oberfläche nach Anspruch 2 oder 3, **dadurch gekennzeichnet, dass** die Befestigungs- und Drehgelenkvorrichtung (6) umfasst:
- einen Haltebügel (6c), der starr an einem Ende des Trennstegs befestigt ist, wobei der Haltebügel eine zylindrische Querstange (6d) trägt, die die Achse der ersten Drehung bildet, die senkrecht (YY') zur Längsachse (XX') des Trennstegs und senkrecht zur Achse (ZZ') des Schwimmers oder des oberen Endes des Steigrohrs, an dem der Trennsteg befestigt ist, angeordnet ist, und
- ein fingerförmiges Längselement (6a), dessen oberes Ende von der die Achse der ersten Drehung bildenden zylindrischen Querstange (6d) durchlaufen wird, um die der Finger (6a) frei drehbar gelagert ist, und
- eine Hülse bildende Manschette (6b) mit einer zylindrischen Öffnung, die geeignet ist, den Finger aufzunehmen, indem sie es dem Finger ermöglicht, sich um sich selbst herum zu drehen, und zwar entlang seiner Längsachse, die mit der Längsachse der zylindrischen Öffnung der Manschette übereinstimmt, die parallel zur Achse (ZZ') des Schwimmers oder des oberen Endes des Steigrohrs angeordnet ist, an dem die Manschette jeweils befestigt ist, wobei die Manschette ein abnehmbares Rückhaltemittel (6b2) aufweist, das geeignet ist, den Finger in der zylindrischen Öffnung der Manschette zurückzuhalten.

5. Anlage zum Verbinden von Seeboden und Oberfläche nach einem der Ansprüche 1 bis 4, **dadurch gekennzeichnet, dass** die Schwimmer (4-1, 4-2) bzw. die oberen Enden (1a) der vertikalen Steigrohre (1-1, 1-2) miteinander durch eine Mehrzahl von parallel angeordneten starren Trennstegen (5) gleicher Länge verbunden sind, vorzugsweise zwei bis zehn Stege, noch bevorzugter zwei oder drei Stege.

6. Anlage zum Verbinden von Seeboden und Oberfläche nach einem der Ansprüche 1 bis 5, **dadurch gekennzeichnet, dass** es sich bei dem Trennsteg um einen Hohlstab handelt, der in seiner Längsrichtung über seine gesamte Länge perforiert (5-2) ist, an seinen Längsenden offen ist und ferner Querperforationen (5d) umfasst, die den Durchgang von Wasser in einer Richtung senkrecht zu seiner Längsrichtung ermöglichen.

7. Anlage zum Verbinden von Seeboden und Oberfläche nach einem der Ansprüche 1 bis 6, **dadurch gekennzeichnet, dass** die Längsenden (5a) des Trennstegs an den zylindrischen Außenwänden der Schwimmer befestigt sind.

8. Anlage zum Verbinden von Seeboden und Oberfläche nach einem der Ansprüche 1 bis 6, **dadurch gekennzeichnet, dass** die Längsenden (5a) des Trennstegs an einer Montagekonstruktion (3) befestigt sind, die eine Verbindungsvorrichtung (3-1, 3-2), vorzugsweise vom Typ Schwanenhals, trägt, die am oberen Ende (1b) des vertikalen Steigrohrs (1-1, 1-2) angeordnet ist und die Verbindung mit einer der besagten flexiblen Leitungen (2-1, 2-2) gewährleistet, wobei die Montagekonstruktion vorzugsweise aus gitterförmig angeordneten Balken (3) besteht.

9. Anlage zum Verbinden von Seeboden und Oberfläche nach Anspruch 7 oder 8, **dadurch gekennzeichnet, dass** sie Trennstege (5), die gelenkig an den Schwimmern (4-1, 4-2) befestigt sind, und andere Trennstege (5), die gelenkig an den Montagekonstruktionen (3) befestigt sind, umfasst.

10. Anlage zum Verbinden von Seeboden und Oberfläche nach Anspruch 7, 8 oder 9, **dadurch gekennzeichnet, dass** die Schwimmer (4-1, 4-2) und/oder die oberen Enden (1b) der vertikalen Steigrohre (1-1, 1-2) im Wesentlichen auf der gleichen Höhe in Bezug auf den Meeresboden liegen und durch mindestens zwei starre Trennstege (5) gleicher Länge miteinander verbunden sind, die parallel und senkrecht zu den Achsen der Schwimmer und/oder jeweils den oberen Enden der Steigrohre angeordnet sind, wobei vorzugsweise die beiden Trennstege mit einem Höhenabstand von mindestens 1/5 der Höhe der Schwimmer und/oder einer Montagekonstruktion (3) an den oberen Enden (1b) der vertikalen Steigrohre, die die Verbindungsvorrichtungen (3-1, 3-2) tragen, angeordnet sind.

11. Anlage zum Verbinden von Seeboden und Oberfläche nach einem der Ansprüche 1 bis 10, **dadurch gekennzeichnet, dass** sie mehr als zwei Hybridtürme und damit mehr als zwei vertikale Steigrohre (1-1, 1-2, 1-3) umfasst, insbesondere 2 bis 50 Steigrohre, vorzugsweise 2 bis 10, noch bevorzugter 2 bis 5, wobei die oberen Enden bzw. die Schwimmer jedes vertikalen Steigrohrs jedes Turms mit am nächsten gelegenen mindestens zwei weiteren oberen Enden der Steigrohre bzw. zwei weiteren Schwimmern der Steigrohre verbunden sind, wobei die flexiblen Leitungen (2-1, 2- 2, 2-3) mit dem gleichen schwimmenden Träger verbunden sind.

12. Anlage zum Verbinden von Seeboden und Oberfläche nach einem der Ansprüche 1 bis 11, **dadurch gekennzeichnet, dass** mindestens einer der Hybridtürme eine starre Leitung in Form von Koaxialleitungen vom PIP-Typ umfasst.

13. Anlage zum Verbinden von Seeboden und Oberfläche nach einem der Ansprüche 1 bis 12, **dadurch gekennzeichnet, dass** jeder Hybridturm eine Verbindungsvorrichtung (4a) zwischen einem Schwimmer einerseits und dem oberen Ende des Steigrohrs (1b) andererseits umfasst, umfassend:
- einen flexiblen Leitungsabschnitt, dessen Enden jeweils an der Unterseite des Schwimmers und dem oberen Ende des vertikalen Steigrohrs eingebettet sind,
- wobei die Verbindung des flexiblen Leitungsabschnitts (4a) mit dem oberen Ende des Steigrohrs mittels einer Schwanenhalsvorrichtung (3-1, 3-2) hergestellt wird, wobei die Schwanenhalsvorrichtung auch die Verbindung zwischen dem Steigrohr (1-1, 1-2) und einem flexiblen Verbindungsrohr (2-1, 2-2) mit dem schwimmenden Träger herstellt,
- wobei der flexible Leitungsabschnitt (4a) vorzugsweise den Schwimmer durchlaufend durch einen starren Rohrleitungsabschnitt (4b), der den Schwimmer von einer Seite zur anderen durchquert, verlängert wird, sodass es möglich ist, in das Innere des vertikalen Steigrohrs von dem oberen Abschnitt des Schwimmers aus und durch den starren Rohrleitungsabschnitt (4b) und dann durch die Schwanenhalsvorrichtung (3-1, 3-2, 3-3) einzugreifen, um auf das Innere des Steigrohrs zuzugreifen, und dann auf die auf dem Meeresboden (10) liegende Unterwasserleitung (11-1, 11-2) zuzugreifen.

14. Anlage zum Verbinden von Seeboden und Oberfläche nach einem der Ansprüche 1 bis 12, **dadurch gekennzeichnet, dass** die Verbindung zwischen dem unteren Ende (1a) des vertikalen Steigrohrs (1-1, 1-2) und einer auf dem Meeresboden (10) liegenden Unterwasserleitung (11-1, 11-2) durch eine flexible Gelenkverbindung (8a) hergestellt wird, die Winkelbewegungen (α) des Steigrohrs ermöglicht.

15. Anlage nach Anspruch 14, **dadurch gekennzeichnet, dass** das Steigrohr an seinem unteren Ende (1a) einen vorzugsweise verstärkten Endleitungsabschnitt umfasst, der mit dem aktuellen Abschnitt des Steigrohrs durch eine flexible Gelenkverbindung (8a) verbunden ist, die Winkelbewegungen des aktuellen Abschnitts des Steigrohrs in Bezug auf den Endleitungsabschnitt ermöglicht, und die Basis (9-1, 9-2) den Endleitungsabschnitt (5-1) des vertikalen Steigrohrs mittels einer mit der Basis (9-1, 9-2) fest verbundenen Struktur (8b) starr in einer festen vertikalen Position hält.

16. Anlage zum Verbinden von Seeboden und Oberfläche nach einem der Ansprüche 1 bis 15, **dadurch gekennzeichnet, dass** die Länge des Trennstegs mindestens den dreifachen Durchmesser des Schwimmers mit größerem Durchmesser beträgt, aber kleiner als die Höhe der Schwimmer ist, vorzugsweise nicht mehr als 35 m, bevorzugt 20 bis 30 m.

17. Verfahren zum Verlegen einer Anlage nach einem der Ansprüche 1 bis 16 auf See, **dadurch gekennzeichnet, dass** es die Schritte umfasst, in denen:
1) von einem auf der Oberfläche (13) liegenden Verlegeschiff (14) aus ein erstes vertikales Steigrohr (1-1) montiert wird, das gesenkt und am Meeresboden an einer ersten Basis (9-1) verankert wird und das am Kopf durch einen ersten oberflächennah eingetauchten Schwimmer (4-1) gespannt wird, und das untere Ende des Steigrohrs mit dem Ende einer auf dem Meeresboden (10) liegenden ersten Unterwasserleitung (11-1) verbunden wird, und
2) von einem auf der Oberfläche (13) liegenden Verlegeschiff (14) aus eine zweite starre Leitung (1-2) montiert wird, die am Kopf durch einen zweiten oberflächennah eingetauchten Schwimmer (4-2) gespannt wird, und das untere Ende des zweiten Steigrohrs mit dem Ende einer auf dem Meeresboden liegenden zweiten Unterwasserleitung (11-2) verbunden wird, und
3) die ersten und zweiten Schwimmer bzw. die Spitzen der ersten und zweiten Steigrohre mittels der Trennstege (5), die durch Kabel (5b) vom Verlegeschiff abgesenkt werden, miteinander verbunden werden, und die Längsenden der Trennstege (5) mittels der Befestigungs- und Gelenkvorrichtungen (6) unter Verwendung eines Unterwasserroboters befestigt werden, wobei auf den Schwimmern und/oder auf Montagekonstruktionen (3) die Verbindungsvorrichtungen (3-1, 3-2) im Bereich der oberen Enden (1b) der Steigrohre getragen werden, und
4) erste und zweite flexible Verbindungsleitungen (4a, 4b) zwischen den oberen Enden (1b) der ersten und zweiten starren Leitungen einerseits und einem gleichartigen schwimmenden Träger (12) andererseits verlegt sind.

## Claims

1. An installation of bottom-to-surface connections for at least two undersea pipes (11-1, 11-2) resting on the sea bottom (10), in particular at a depth of more than 500 m, the installation comprising at least two hybrid towers, each comprising:
a) a rigid pipe (1-1, 1-2) constituting a vertical riser having its bottom end (1a) fastened to a base (9-1, 9-2) resting on or anchored to the sea bottom (10), each rigid pipe being connected to a respective undersea pipe (11-1, 11-2) resting on the sea bottom, and having the top end (1b) of the riser tensioned in substantially vertical manner by a float (4-1, 4-2) immersed in the subsurface, preferably at a depth of at least 50 m relative to the surface (13), the top end being connected to the float; and
b) a flexible connection pipe (2-1, 2-2) providing the connection between a floating support (12) and the top end (1b) of said vertical riser via a junction device (3-1, 3-2), preferably of the goose-neck type, arranged at the top end (1b) of said vertical riser;
the installation being **characterized in that** said two hybrid towers are connected together by at least one rigid separator bar (5) of length not less than the diameter of the larger-diameter float, the longitudinal ends (5a) of each said separator bar (5) being fastened to the top ends (1b) of said risers or to said two floats by fastener devices allowing at least a first movement in rotation of said bar relative to an axis (YY') perpendicular to the longitudinal axis (XX') of said separator bar and perpendicular to the axis (ZZ') of said float or of said top end of the riser to which it is fastened.

2. A bottom-to-surface connection installation according to claim 1, **characterized in that** the fastener device is a rotary fastener and hinge device (6) having at least one degree of freedom to move in rotation so as to allow at least said first movement in rotation.

3. A bottom-to-surface connection installation according to claim 2, **characterized in that** the fastener and hinge device has two degrees of freedom to move in rotation allowing:
a) said separator bar (5) to perform said first movement in rotation; and
b) said separator bar (5) to perform a second movement in rotation relative to the longitudinal axis (ZZ') of said float or of said riser end to which it is fastened.

4. A bottom-to-surface connection installation according to claim 2 or claim 3, **characterized in that** said rotary fastener and hinge device (6) comprises:
- a clevis (6c) rigidly fastened to one end of said separator bar, which clevis supports a transverse cylindrical rod (6d) forming the axis (YY') for said first movement in rotation arranged perpendicularly to the longitudinal axis (XX') of said separator bar and perpendicularly to the axis (ZZ') of said float or of said riser top end to which said separator bar is fastened; and
- a longitudinal element in the form of a finger (6a) having its top end with said transverse cylindrical rod (6d) passing therethrough forming the axis for said first movement in rotation and about which said finger (6a) is mounted so as to be free to move in rotation; and
- a sleeve forming a sheath (6b) having a cylindrical orifice adapted to receive said finger and allowing said finger to move in rotation about its longitudinal axis coinciding with the longitudinal axis of said cylindrical orifice in the sleeve arranged parallel to the axis (ZZ') of said float or of said riser top end to which said sleeve is fastened, said sleeve including removable retaining means (6b2) suitable for retaining said finger in said cylindrical orifice of said sleeve.

5. A bottom-to-surface connection installation according to any one of claims 1 to 4, **characterized in that** said floats (4-1, 4-2) or said top ends (1a) of said vertical risers (1-1, 1-2) are connected together by a plurality of rigid separator bars (5) of the same length arranged in parallel preferably by two to ten bars, more preferably by two or three bars.

6. A bottom-to-surface connection installation according to any one of claims 1 to 5, **characterized in that** said separator bar is a hollow rod perforated (5-2) in its longitudinal direction over its entire length opening out at its longitudinal ends, and also including transverse perforations (5d) allowing water to pass in a direction perpendicular to its longitudinal direction.

7. A bottom-to-surface connection installation according to any one of claims 1 to 6, **characterized in that** said longitudinal ends (5a) of said separator bar are fastened to the cylindrical outside walls of said floats.

8. A bottom-to-surface connection installation according to any one of claims 1 to 6, **characterized in that** the longitudinal ends (5a) of said separator bar are fastened to an assembly structure (3) supporting a junction device (3-1, 3-2), preferably of the goose-neck type, arranged at the top end (1b) of said vertical riser (1-1, 1-2) and providing its junction with a said flexible pipe (2-1, 2-2), said assembly structure being constituted by a latticework of beams (3).

9. A bottom-to-surface connection installation according to claim 7 or claim 8, **characterized in that** it includes said separator bars (5) fastened in hinged manner to said floats (4-1, 4-2) and other said separator bars (5) fastened in hinged manner to said assembly structures (3) .

10. A bottom-to-surface connection installation according to claim 7, 8, or 9, **characterized in that** said floats (4-1, 4-2) and/or said the top ends (1b) of said vertical risers (1-1, 1-2) are substantially at the same height above the sea bottom and are connected together by at least two rigid separator bars (5) of the same length arranged in parallel and perpendicularly to the axes of said floats and/or of the top ends of said risers, said two separator bars preferably being spaced apart by a height of at least one-fifth of the height of said floats and/or of an assembly structure (3) via which said top ends (1b) of said vertical risers supporting said junction devices (3-1, 3-2).

11. A bottom-to-surface connection installation according to any one of claims 1 to 10, **characterized in that** it further comprises more than two hybrid towers and thus more than two said vertical risers (1-1, 1-2, 1-3), and in particular 2 to 50 risers, preferably 2 to 10 risers, still more preferably 2 to 5 risers, the top ends or the floats of each of the vertical risers of each tower being connected to at least two other riser top ends or two other riser floats that are the closest thereto, the flexible pipes (2-1, 2-2, 2-3) being connected to a common floating support.

12. A bottom-to-surface connection installation according to any one of claims 1 to 11, **characterized in that** at least one of said hybrid towers has a rigid pipe in the form of two coaxial pipes of the pipe-in-pipe (PIP) type.

13. A bottom-to-surface connection installation according to any one of claims 1 to 12, **characterized in that** each hybrid tower comprises a connection device (4a) between a said float and the top end of said riser (1b) and comprising:
- a flexible pipe portion having its ends embedded respectively in the underface of said float and the top end of said vertical riser; and
- the connection of said flexible pipe portion (4a) to the top end of said riser taking place via a goose-neck shaped device (3-1, 3-2), which goose-neck shaped device also provides the connection of said riser (1-1, 1-2) and of a said flexible connection pipe (2-1, 2-2) with the floating support; and
- said flexible pipe portion (4a) preferably being extended through said float by a rigid tubular pipe portion (4b) passing right through the float so that it is possible to take action inside said vertical riser from the top portion of said float through said rigid tubular pipe portion (4b), then through said goose-neck shaped device (3-1, 3-2, 3-3), so as to access the inside of said riser, and then access said undersea pipe (11-1, 11-2) resting on the sea bottom (10).

14. A bottom-to-surface connection installation according to any one of claims 1 to 12, **characterized in that** the connection between the bottom end (1a) of said vertical riser (1-1, 1-2) and a said undersea pipe (11-1, 11-2) resting on the sea bottom (10) takes place via a flexible joint hinge (8a) that allows the riser to perform angular movements (α).

15. An installation according to claim 14, **characterized in that** said riser includes at its bottom end (1a) a terminal pipe portion, preferably a reinforced pipe portion, that is connected to the main portion of the riser by a said flexible joint hinge (8a) that allows said angular movements of the main portion of the riser relative to said terminal pipe portion, and said base (9-1, 9-2) rigidly holding said terminal pipe portion (5-1) of said vertical riser in a fixed vertical position by means of a structure (8b) that is secured to said base (9-1, 9-2).

16. A bottom-to-surface connection installation according to any one of claims 1 to 15, **characterized in that** the length of the separator bar is at least three times the diameter of the larger-diameter float but less than the height of the float, and preferably no more than 35 m, preferably in the range 20 m to 30 m.

17. A method of laying at sea an installation according to any one of claims 1 to 16, the method being **characterized in that** it comprises the following steps:
1) assembling from a laying vessel (14) on the surface (13) a first vertical riser (1-1) that is lowered and anchored to the sea bottom at a first base (9-1) and that is tensioned at its head by a first float (4-1) immersed in the subsurface, and connecting the bottom end of said riser to the end of a said first undersea pipe (11-1) resting on the sea bottom (10); and
2) assembling from the laying vessel (14) on the surface (13) a second rigid pipe (1-2) that is tensioned at its head by a second float (4-2) immersed in the subsurface, and connecting the bottom end of said second riser to the end of a said second undersea pipe (11-2) resting on the sea bottom; and
3) connecting together said first and second floats or the tops of said first and second risers by means of said separator bars (5) lowered by cables (5b) from the laying vessel and fastening the longitudinal ends of said separator bars (5) by means of said fastener and hinge devices (6) by using a remotely operated vehicle (ROV), to said floats and/or said assembly structures (3) supporting said junction devices (3-1, 3-2) at the top ends (1b) of said risers; and
4) laying first and second flexible connection pipes (4a, 4b) between the top ends (1b) of said first and second rigid pipes and a common floating support (12).
